# EUROPEAN PATENT APPLICATION

(11) **EP 3 059 275 A1**
(43) Date of publication of application: **24.08.2016**
(21) Application number: 15181175.9
(22) Date of filing: 14.08.2015
(51) Int. Cl.: C08J 5/00, C08J 5/04, C08J 5/06, C08K 3/34

(54) **LOW-VOC NATURAL FIBER COMPOSITE MATERIAL, PREPARATION METHOD THEREFOR AND APPLICATION THEREOF**

(30) Priority: 17.02.2015 CN 201510085029
(71) Applicant: Changchun Bochao Automotive Parts Co. Ltd, Changchun, Jilin 130000 (CN)
(72) Inventor: PAN, Guoli, 130000 Changchun (CN)
(74) Representative: Davidson, Becky

(57) **Abstract**

The present invention relates to a low-volatile organic compound (VOC) natural fiber composite material, a preparation method therefor and an application thereof. In the method, a nanoclay and a resin are blend-spun to prepare modified synthetic fibers, the modified synthetic fibers are mixed with natural fibers or with natural fibers and other fibers to prepare mixed fibers, and the mixed fibers are shredded, mixed, lapped, needle punched or hot pressed, so as to prepare the low-VOC natural fiber composite material. The low-VOC natural fiber composite material can be applied to automobile interior trims after hot pressing. The low-VOC natural fiber composite material has features of low VOC, low density, light weight, low cost, high strength, good toughness, high deformability, high safety, and being environmentally-friendly and recyclable.

## Description

### BACKGROUND

### Technical Field

The present invention relates to a fiber composite material, and more particularly to a low-volatile organic compound (VOC) natural fiber composite material fabricated from a mixture of natural fibers and chemical fibers by using a nonwoven technique, a preparation method therefor and an application thereof

### Related Art

In recent years, with the increased environmental awareness of the general public, natural fibers have been used for fabrication of automobile interior trims due to their excellent properties of being environmentally-friendly, being degradable, light weight, low cost, high specific strength and specific modulus, being friction and wear resistant, and being recyclable.

However, during processing and use of the natural fibers, due to factors such as temperature, humidity and light, residual substances such as pectin, hemicelluloses and lignin on the surface of bast fibers are degraded into volatile organic compounds (VOC) harmful to the human body such as formaldehyde, acetaldehyde, acrolein, benzene, toluene and styrene. In addition, during processing, a molten thermoplastic resin cracks to generate some low molecular weight organic compounds such as ketones and aldehydes. Natural fiber-reinforced composite products for use as automobile interior trims generally have direct or indirect contact with the human body, and these volatile low molecular weight organic substances seriously affects the health of the user in a relatively closed environment, restricting the application and development of natural fiber composite materials for use in automobile interior trims.

Glass mat reinforced thermoplastics (GMT) products use a thermoplastic resin as the matrix and use fiberglass as a skeleton-reinforcing light weight composite material, and have high mechanical properties. However, there are deficiencies in use, for example, skin allergy occurs during processing and treatment of fiber-reinforced articles, and a residue is left after combustion of scrap GMT products. Therefore, it is necessary to seek for a material that can replace fiberglass.

### SUMMARY

To overcome the above deficiencies, the present invention provides a low-VOC natural fiber composite material, a preparation method therefor and an application thereof. The special porous structure of a nanoclay is used to absorb VOC substances such as aldehydes, ketones and benzene series, with a desorption temperature not lower than 270°C, thereby effectively reducing VOC emission of the natural fiber composite material.

According to one aspect of the present invention, a method for preparing a low-VOC natural fiber composite material is provided. The method includes: step S1: blend-spinning a nanoclay and a resin to prepare modified synthetic fibers; step S2: mixing the modified synthetic fibers with natural fibers or with natural fibers and other fibers to prepare mixed fibers, thereby forming the low-VOC natural fiber composite material.

Optionally, after the step S2, the method further includes: step S3: spraying a nanoclay-coupling agent liquid mixture into the mixed fibers, thereby forming the low-VOC natural fiber composite material.

Preferably, in the step S1, the nanoclay is 0.1%-2% of the total weight of the modified synthetic fibers.

The nanoclay may be any nanoclay in the geological classes of the montmorillonites, bentonites, kaolinites, hectorites and halloysites.

Optionally, the nanoclay used in the step S1 is nano-montmorillonite or inorganic particles having an absorption function. Preferably, the nanoclay is nano-montmorillonite. The nanoclay preferably has an average particle diameter in the range of 2-10 µm. The particle size measurement is carried out through observation using a transmission electron microscope, to ensure that the particle size of the nanoclay used is within the specified range.

The resin used in the step S1 is a thermoplastic polymer material.

Optionally, the thermoplastic polymer material is one or more selected from the group consisting of polyethylene, polypropylene, polylactic acid, a polyester material, polyethylene terephthalate and a polyamide material.

Optionally, in the step S2, the modified synthetic fibers are 30-70% of the total weight of the mixed fibers, and the natural fibers or the natural fibers and other fibers are 70-30% of the total weight of the mixed fibers.

Preferably, in the step S2, the modified synthetic fibers are 45-55% of the total weight of the mixed fibers, and the natural fibers or the natural fibers and other fibers are 45-55% of the total weight of the mixed fibers.

Optionally, the natural fibers and the other fibers are mixed at a mass ratio of 9:1 to 1:9.

Optionally, the natural fibers are one or a mixture of hemp, jute, linen, ramie, kenaf, cotton, kapok fibers, sisal fibers, glass fibers and basalt fibers. The other fibers may be selected from glass fibers and basalt fibers and combinations thereof.

Preferably, in the step S3, a method for preparing the nanoclay-coupling agent liquid mixture includes: adding 0.5-2% of the nanoclay, 0.25-1% of a dispersant, and 1-2% of a silane coupler based on the total weight of the mixed fibers into water to form a nanoclay-coupling agent suspension having a concentration of 10-30%; stirring the nanoclay-coupling agent suspension at 1000-1350 rpm for 0.5-2 h; and stirring the nanoclay-coupling agent suspension at 1700-2000 rpm for 1.5-3 h, thus forming the nanoclay-coupling agent liquid mixture.

Preferably, the step S3 further includes: spraying, in a shredding or mixing stage in a nonwoven process, the nanoclay-coupling agent liquid mixture into the mixed fibers for blending; shredding, mixing, lapping and needle punching the mixed fibers mixed with the nanoclay-coupling agent liquid mixture, to prepare the low-VOC natural fiber composite material; and/or performing hot pressing treatment on the low-VOC natural fiber composite material to prepare a low-VOC natural fiber composite mat or prepressing plate having a surface density of 500-4000 g/m².

Preferably, for the hot pressing treatment, the preheating temperature is 190-230°C, the preheating time is 20-120s, and the dwell time is 20-90s.

According to another aspect of the present invention, a low-VOC natural fiber composite material prepared using the above preparation method is provided.

According to still another aspect of the present invention, an application of a low-VOC natural fiber composite material prepared using the above preparation method in preparation of automobile interior trims is provided.

The application includes the following steps: step S11: mixing the low-VOC natural fiber composite material with polypropylene fibers and wood fibers to form a matrix; step S 12: laying a surface decorative layer on a side surface of the matrix to form a composite mat material; and step S 13: die-forming the composite mat material.

The step S13 further includes: tailoring and blanking the composite mat material according to a designed shape, and then heating and softening the composite mat material in a heating apparatus at 200-220°C; and placing the softened mat material into a mold for press molding at a pressure of 30 KN/cm² for a dwell time of 3-5 minutes, and removing the mold to obtain the finished product.

In the prior art, a conventional natural fiber polymer composite material used for production of automobile interior trims needs to be additionally wrapped by a decorative facing material, which requires a high manufacturing cost and complex preparation process. In the present invention, a method for manufacturing an automobile door trim panel using a natural fiber polymer composite material is provided, which can effectively reduce the manufacturing cost and simplify the manufacturing process.

The above fibers are formulated on the premise of ensuring that the composite base material of automobile interior trims can achieve the required mechanical strength, formability and sound insulation effect, and the present invention is low VOC and environmentally-friendly and has a light weight and low cost.

### BRIEF DESCRIPTION OF THE DRAWINGS

No drawings.

### DETAILED DESCRIPTION

To make the objectives, technical solutions and advantages of the present invention more comprehensible, the present invention is described in further detail through specific embodiments and with reference to the accompanying drawings. It should be understood that these descriptions are merely exemplary, and are not intended to limit the scope of the present invention. In addition, in the following descriptions, commonly known structures and technologies are omitted to avoid confusion of the concepts of the present invention.

The present invention provides a method for preparing a low-VOC natural fiber composite material. The method includes the following process steps:
Step S1: Blend-spin a nanoclay and a resin to prepare modified synthetic fibers.
   In this step, a resin slice modified and reinforced by the nanoclay is blend-spun to obtain modified synthetic fibers. As described here, the blend-spinning process specifically comprises the following steps: firstly, blending 1-20wt% of a nanoclay and 99-80wt% of resin particles, preferably 5-10wt% of a nanoclay and 95-90wt% of resin particles of the same kind, the resin particles surfaces were heated to melt at a high temperature, then the nanoclay particles were mixed with melt resin particles in a desired ratio, followed by stirring in a high-speed mixer (e.g. with a rpm of 400-1200 n/min) under air-cooling, to prepare nanocomposite resin particles. The pelletizing heating temperature is a temperature between the resin melt temperature and 300°C, preferably the heating temperature is a temperature of the resin melt temperature ± 30 °C and below 270 °C. Secondly, blending 1-20wt% of nanocomposite resin particles and 99-80wt% of resin particles of the same kind, preferably 5-10wt% of a nanocomposite resin particle and 95-90wt% of resin particles of the same kind, to prepare 4-10 dtex modified synthetic fibers.
   Because of small particle size of the nanoclay, directly blend-spinning nanoclay and resin may have the problem of unevenly blended nanoclay, and further lead to fine particles adhered to the inner wall of the heating device, too high local temperature, and decreased adsorption activities. In the present invention, firstly, nanocomposite resin particles may be prepared by high temperature melt blend granulation, then blended spinning with a resin of the same kind, so as to maintain the adsorption activity of the nanoclay and its uniformly distribution within the synthetic fibers.
   In a preferred embodiment of the present invention, 0.1%-2% of the nanoclay based on the total weight of the prepared mixed fibers is added into resin particles.
   The nanoclay used is in the form of particles having an average particle diameter in the range of 2-10 µm, for example, nano-montmorillonite or similar inorganic particles having an absorption function; The resin used to prepare the modified synthetic fibers may be a thermoplastic polymer material, and for example, may be one or more selected from the group consisting of polyethylene, polypropylene, polylactic acid, a polyester material, polyethylene terephthalate and a polyamide material.
Step S2: Mix the modified synthetic fibers with natural fibers or with natural fibers and other fibers to prepare mixed fibers.
   In this step, the modified synthetic fibers prepared in the previous step are mixed with natural fibers to prepare mixed fibers, or the modified synthetic fibers are mixed with a mixture of natural fibers and other fibers to prepare mixed fibers. In a preferred embodiment of the present invention, the mass ratio of the modified synthetic fibers (for example, modified polypropylene fibers) and the natural fibers is that the mass percentage of the modified synthetic fibers is 30-70% of the total weight of the mixed fibers and the mass percentage of the natural fibers or of the mixture of the natural fibers and other fibers is 70-30% of the total weight of the mixed fibers. In a preferred embodiment of the present invention, the mass percentage of the modified synthetic fibers is 45-55% of the total weight of the mixed fibers and the mass percentage of the natural fibers or of the mixture of the natural fibers and other fibers is 45-55% of the total weight of the mixed fibers. In another preferred embodiment of the present invention, the mass percentage of the modified synthetic fibers is 49-51 % of the total weight of the mixed fibers and the mass percentage of the natural fibers or of the mixture of the natural fibers and other fibers is 49-51% of the total weight of the mixed fibers. However, the present invention is not limited thereto, and other component ratios may also be used.
   In an embodiment in which the modified synthetic fibers are mixed with natural fibers and other fibers to prepare mixed fibers, the natural fibers and the other fibers are mixed at a mass ratio of 9:1 to 1:9, and preferably 9:1 to 6:4. Preferably, the natural fibers and the inorganic fibers are in a mass ratio of 6:4.
   In the present invention, the natural fibers used may be one or a mixture of hemp, jute, linen, ramie, kenaf, cotton, kapok fibers, sisal fibers, glass fibers and basalt fibers. The plant fibers are stringy and flexible. The other fibers used are preferably inorganic fibers, for example, one or a mixture of glass fibers and basalt fibers. The use of inorganic fibers increase tensile properties and flame resistance.
Step S3: Spray a nanoclay-coupling agent liquid mixture into the mixed fibers to prepare the low-VOC natural fiber composite material.
   As described above, the preparation of the low-VOC natural fiber composite material is already completed by performing the steps S1 and S2. The implementation of the step S3 is a preferred embodiment for further reducing the VOC content in the natural fiber composite material. Therefore, the step S3 is optional, but not necessary.

In this step, first, the nanoclay-coupling agent liquid mixture is prepared, and then the nanoclay-coupling agent liquid mixture is used to modify the mixed fibers prepared in the previous step, so as to obtain the low-VOC natural fiber composite material.

First, the nanoclay and a silane coupler may be made into an emulsion. 0.5-2% of the nanoclay, 0.25-1% of a dispersant (for example, polyvinyl pyrrolidone) and 1-2% of the silane coupler based on the total weight of the prepared mixed fibers are added into water to formulate a nanoclay suspension having a concentration of 10-30%. The nanoclay suspension is stirred using a mechanical stirrer at 1000-1350 rpm for 0.5-2 h, and then at 1700-2000 rpm for 1.5-3 h, so as to prepare a uniformly dispersed suspension of the nanoclay-coupling agent liquid mixture.

Secondly, in a shredding or mixing stage in a nonwoven process, the nanoclay-coupling agent liquid mixture is sprayed, by using a spraying apparatus, into the mixed fibers (the mixed fibers of the modified synthetic fibers with the natural fibers, or with the natural fibers and other fibers) prepared in the previous step, thereby achieving blending.

Next, the mixed fibers mixed with the nanoclay-coupling agent liquid mixture are shredded, mixed, lapped, needle punched or hot pressed to prepare the low-VOC natural fiber composite material, which is specifically formed into a low-VOC natural fiber composite mat or prepressing plate, and the natural fiber mat or prepressing plate has a surface density of 500-4000 g/m².

Further, the natural fiber composite mat or prepressing plate is hot pressed into a required shape. In the hot pressing process, the preheating temperature is 190-230°C, the preheating time is 20-120s, and the dwell time is 20-90s.

In the present invention, first, the nanoclay is used to modify and reinforce the resin to form a modified polymer, so as to effectively absorb and reduce low molecular weight organic compounds such as ketones and aldehydes generated due to cracking of the thermoplastic resin during processing.

Further, the satisfactory nanoclay is made into a uniformly dispersed suspension of the nanoclay-coupling agent liquid mixture, which is blended with the mixed fibers of the natural fibers with the modified polymer as uniformly as possible by means of spraying, so as to form a uniform absorption structure, which is a micron-scale microstructure and can effectively absorb and reduce formaldehyde, acetaldehyde, acrolein, benzene, toluene, styrene and other VOCs harmful to the human body that are generated due to decomposition of the natural fibers.

It can be seen that in the present invention, a low-VOC natural fiber composite material is formed by using a particular preparation process, which can more effectively use the special porous structure of the nanoclay to absorb VOC substances such as aldehydes, ketones and benzene series, with a desorption temperature not lower than 270°C, thereby effectively reducing VOC emission of the natural fiber composite material.

Preferred embodiments of the method for preparing a low-VOC natural fiber composite material of the present invention are introduced below. The embodiments are merely preferred or preferable solutions for achieving the objectives of the present invention, but should not be construed as limiting the present invention.

### First Embodiment

First, a method for preparing a low-VOC natural fiber composite material according to a first embodiment of the present invention is introduced. In this embodiment, modified synthetic fibers are mixed with natural fibers to prepare mixed fibers.

In the Examples provided below, the nanoclay is, for example, DEOACT-S1, DEOACT-S2, DEOACT-S3, DEOACT-S5 and/or DEOACT-S10 nanoclay, although it is not limited thereto.

Comparative example 1 introduced below is an exemplary comparative example in the prior art is introduced, the effect of which will be compared with those of specific examples of the present invention.

### Comparative Example 1

50 Kg of hemp fibers and 50 Kg of polypropylene fibers were shredded, carded, needle punched and hot pressed to prepare a composite material having a surface density of 1500 g/m², where the preheating temperature was 210°C, the preheating time was 40s, and the dwell time was 35s.

The results of VOC detection in the composite material of this comparative example 1 were as follows:
formaldehyde: 3.14 mg/kg,
acetaldehyde: 34.63 mg/kg,
TVOC: 45 Cµg/g

It can be seen that the composite material prepared using the preparation method of the prior art contained high contents of formaldehyde, acetaldehyde and TVOC, and is obviously harmful to the environment and human body.

### Example 1

2% of nano-montmorillonite, 1% of polyvinyl pyrrolidone as the dispersant, and 2% of the silane coupler based on the total weight of the mixed fibers were added into water to formulate a suspension having a concentration of 20%, which was stirred using a mechanical stirrer at 1350 rpm for 1 h and then at 1700 rpm for 2 h, so as to prepare a uniformly dispersed nanoclay suspension.

1% of the nanoclay based on the total weight of the mixed fibers was blend-spun with polypropylene fibers to prepare modified polypropylene fibers. 50 Kg of the modified polypropylene fibers were mixed with 50 Kg of hemp fibers to form mixed fibers. The nanoclay suspension was sprayed into the mixed fibers of hemp fibers with polypropylene fibers in the shredding stage, and after shredding, carding, needle punching and hot pressing, a composite material having a surface density of 1500 g/m² was prepared, where the preheating temperature is 210°C, the preheating time was 40s, and the dwell time was 35s.

The results of VOC detection in the composite material of this example were as follows:
formaldehyde: 0.55 mg/kg,
acetaldehyde: 5.44 mg/kg,
TVOC: 10 Cµg/g

Compared with the foregoing comparative example 1, the contents of formaldehyde, acetaldehyde and TVOC in the composite material prepared in this example were all significantly reduced, greatly reducing the harm of the material to the environment and human body.

### Example 2

1 % of nano-montmorillonite, 0.25% of polyvinyl pyrrolidone as the dispersant and 1.5% of the silane coupler based on the total weight of the mixed fibers were added into water to formulate a suspension having a concentration of 20%, which was stirred using a mechanical stirrer at 1350 rpm for 1 h and then at 1700 rpm for 2 h, so as to prepare a uniformly dispersed nanoclay suspension.

1% of the nanoclay based on the total weight of the mixed fibers was blend-spun with polypropylene fiber to prepare modified polypropylene fibers. 50 Kg of the modified polypropylene fibers were mixed with 50 Kg of hemp fibers to form mixed fibers. The nanoclay suspension was sprayed into the mixed fibers of hemp fibers with polypropylene fibers in the shredding stage, and after shredding, carding, needle punching and hot pressing, a composite material having a surface density of 1500 g/m² was prepared, where the preheating temperature is 210°C, the preheating time was 40s, and the dwell time was 35s.

The results of VOC detection in the composite material of this example were as follows:
formaldehyde: 0.87 mg/kg,
acetaldehyde: 6.39 mg/kg,
TVOC: 12 Cµg/g

Compared with the foregoing comparative example 1, the contents of formaldehyde, acetaldehyde and TVOC in the composite material prepared in this example were all significantly reduced, greatly reducing the harm of the material to the environment and human body.

### Example 3

0.5% of nano-montmorillonite, 0.25% of polyvinyl pyrrolidone as the dispersant and 1% of the silane coupler based on the total weight of the mixed fibers were added into water to formulate a suspension having a concentration of 20%, which was stirred using a mechanical stirrer at 1350 rpm for 1 h and then at 1700 rpm for 2 h, so as to prepare a uniformly dispersed nanoclay suspension.

1% of the nanoclay based on the total weight of the mixed fibers was blend-spun with polypropylene fibers to prepare modified polypropylene fibers. 50 Kg of the modified polypropylene fibers were mixed with 50 Kg of hemp fibers to form mixed fibers. The nanoclay suspension was sprayed into the mixed fibers of hemp fibers with polypropylene fibers in the shredding stage, and after shredding, carding, needle punching and hot pressing, a composite material having a surface density of 1500 g/m² was prepared, where the preheating temperature is 210°C, the preheating time was 40s, and the dwell time was 35s.

The results of VOC detection in the composite material of this example were as follows:
formaldehyde: 1.27 mg/kg,
acetaldehyde: 9.43 mg/kg,
TVOC: 18 Cµg/g

Compared with the foregoing comparative example 1, the contents of formaldehyde, acetaldehyde and TVOC in the composite material prepared in this example were all significantly reduced, greatly reducing the harm of the material to the environment and human body.

### Second Embodiment

A method for preparing a low-VOC natural fiber composite material according to a second embodiment of the present invention is introduced below. In this embodiment, modified synthetic fibers are mixed with natural fibers and other fibers to prepare mixed fibers. The natural fibers and the other fibers are mixed at a mass ratio of 9:1 to 1:9, and preferably 9:1 to 6:4.

Optionally, only the foregoing step S1 and step S2 are performed and the step S3 is not performed in this embodiment, and this embodiment also can achieve the objective and expected technical effect of the present invention. In the present invention, the application of other fibers, especially inorganic fibers, for example, basalt fibers or glass fibers can significantly increase the tensile properties and flame resistance of the composite material.

First, an exemplary comparative example of natural fibers is introduced; and the effect of this comparative example will be compared with those of specific examples of the present invention.

### Comparative Example 1

20 Kg of bast fibers and 50 Kg of polypropylene fibers were shredded, carded, needle punched and hot pressed to prepare a composite material having a surface density of 1500 g/m², where the preheating temperature was 210°C, the preheating time was 40s, and the dwell time was 35s.

The results of VOC detection in the composite material of this comparative example 1 were as follows:
formaldehyde: 3.83 mg/kg,
acetaldehyde: 32.47 mg/kg,
TVOC: 47 Cµg/g
tensile strength: 17MPa
combustibility: 25 mm/min

It can be seen from comparative example 1 that the values of formaldehyde, acetaldehyde, TVOC, tensile strength and flame resistance were shown as above with mixed fibers prepared by synthetic fibers and natural fibers.

As described below, an exemplary comparative example of mixed fibers of natural fibers with other fibers in the prior art is introduced, where the other fibers are, for example, basalt fibers; and the effect of this comparative example will be compared with those of specific examples of the present invention.

### Comparative Example 2

20 Kg of basalt fibers, 30 Kg of bast fibers and 50 Kg of polypropylene fibers were shredded, carded, needle punched and hot pressed to prepare a composite material having a surface density of 1500 g/m², where the preheating temperature was 210°C, the preheating time was 40s, and the dwell time was 35s.

The results of VOC detection in the composite material of this comparative example 2 were as follows:
formaldehyde: 2.53 mg/kg,
acetaldehyde: 28.47 mg/kg,
TVOC: 42 Cµg/g
tensile strength: 27MPa
combustibility: 14 mm/min

It can be seen from comparative example 2 that, compared with the results of comparative example 1, formaldehyde, acetaldehyde, TVOC index has no significant improvement, but tensile strength and flame resistance were significantly increased with mixed fibers prepared by synthetic fibers and natural fibers in addition to other fibers.

It can be seen that the composite material prepared using the preparation method of the prior art contained high contents of formaldehyde, acetaldehyde and TVOC, and is obviously harmful to the environment and human body, failing to meet the product requirements on environmental protection.

### Example 1

0.5% of nanoclay based on the total weight of the mixed fibers was blend-spun with polypropylene fibers to prepare modified polypropylene fibers. 50 Kg of the modified polypropylene fibers were mixed with 20 Kg of basalt fibers and 30 Kg of bast fibers to form mixed fibers, which were shredded, carded, needle punched and hot pressed to form a composite material having a surface density of 1500 g/m², where the preheating temperature is 210°C, the preheating time was 40s, and the dwell time was 35s.

Actual detection results:
formaldehyde: 1.46 mg/kg,
acetaldehyde: 10.47 mg/kg,
TVOC: 18 Cµg/g
tensile strength: 28.4MPa
combustibility: 10 mm/min

Compared with the foregoing comparative example 1, the tensile property and flame resistance of the composite material prepared by the example significantly increased because of mixing basalt fibers and bast fibers.

Compared with the foregoing comparative example 1 and 2, the contents of formaldehyde, acetaldehyde and TVOC in the composite material prepared in this example were all significantly reduced, greatly reducing the harm of the material to the environment and human body.

### Example 2

1% of nanoclay based on the total weight of the mixed fibers was blend-spun with polypropylene fibers to prepare modified polypropylene fibers. 50 Kg of the modified polypropylene fibers were mixed with 20 Kg of basalt fibers and 30 Kg of bast fibers to form mixed fibers, which were shredded, carded, needle punched and hot pressed to form a composite material having a surface density of 1500 g/m², where the preheating temperature is 210°C, the preheating time was 40s, and the dwell time was 35s.

Actual detection results:
formaldehyde: 0.78 mg/kg,
acetaldehyde: 4.81 mg/kg,
TVOC: 12 Cµg/g
tensile strength: 27.6MPa
combustibility: 8 mm/min

Compared with the foregoing comparative example 1, the tensile property and flame resistance of the composite material prepared by the example significantly increased because of mixing basalt fibers and bast fibers.

Compared with the foregoing comparative example 1, 2 and example 1, the contents of formaldehyde, acetaldehyde and TVOC in the composite material prepared in this example were all further significantly reduced, greatly reducing the harm of the material to the environment and human body.

### Example 3

2% of nanoclay based on the total weight of the mixed fibers was blend-spun with polypropylene fibers to prepare modified polypropylene fibers. 50 Kg of the modified polypropylene fibers were mixed with 20 Kg of basalt fibers and 30 Kg of bast fibers to form mixed fibers, which were shredded, carded, needle punched and hot pressed to form a composite material having a surface density of 1500 g/m², where the preheating temperature is 210°C, the preheating time was 40s, and the dwell time was 35s.

Actual detection results:
formaldehyde: 0.56 mg/kg,
acetaldehyde: 3.62 mg/kg,
TVOC: 9 Cµg/g
tensile strength: 26.88 MPa
combustibility: 6 mm/min

Compared with the foregoing comparative example 1, example 1 and example 2, the contents of formaldehyde, acetaldehyde and TVOC in the composite material prepared in this example were all further significantly reduced, greatly reducing the harm of the material to the environment and human body.

As described above, only the foregoing step S 1 and step S2 are performed and the step S3 is not performed in this embodiment, and this embodiment also can achieve the objective and expected technical effect of the present invention. Further, the step S3 may also be performed, so that a better technical effect can be achieved.

According to another aspect of the present invention, an application of a low-VOC natural fiber composite material prepared using the above preparation method in preparation of automobile interior trims is provided. The low-VOC natural fiber composite material is used as the main material, and mixed with polypropylene fibers, wood fibers and/or terylene fibers to form a composite mat material, which is die-formed on a press.

The application includes the following steps:
Step S11: Mix the low-VOC natural fiber composite material with polypropylene fibers and wood fibers to form a matrix
   Herein, the low-VOC natural fiber composite material is prepared by using the above preparation method of the present invention, and for example, is a bast fiber composite material prepared from bast fibers by using the above method.
Step S12: Lay a surface decorative layer on a side surface of the matrix to form a composite mat material.
   In this step, polypropylene fibers and terylene fibers may be laid on one side surface of the matrix to form a surface decorative layer, so as to form the composite mat material.
Step S13: Die-form the composite mat material.

In this step, one-step die-forming is performed on the press according to the following process steps:
a. tailoring and blanking the composite mat material according to a designed shape, and then heating and softening the composite mat material in a heating apparatus at 200-220°C; and
b. placing the softened mat material into a mold for press molding at a pressure of 30 KN/cm² for a dwell time of 3-5 minutes, and removing the mold to obtain the finished product.

The product is tested and the results show that its tensile strength is 21.62 MPa, elastic modulus in bending is 1728.4 MPa, impact strength is 12 KJ/m², all of which are higher than those required by industrial standards.

To meet design requirements on the appearance, a corresponding pattern required by the product is provided on the surface of the mold cavity of the mold, so that a beautiful product appearance can be achieved while implementing one-step molding.

The application of the present invention is advantageous in that the natural fiber polymer composite material prepared using the above preparation method of the present invention has good physical and thermal properties, and an intact automobile door trim panel having a beautiful appearance can be achieved simply by one-step die-forming; the process is simple and easy to implement, greatly reducing the manufacturing cost. In practical production, the cost of manufacturing an automobile door trim panel by using the method of the present invention is reduced by 50% and the weight reduced by 20% compared with the prior art, and meanwhile, the strength and toughness of the automobile door trim panel are increased, so that the product is impact resistant and not easily deformed. In addition, the product is recyclable and does not pollute the environment, bringing considerable social and economic benefits.

## Claims

1. A method for preparing a low-volatile organic compound (VOC) natural fiber composite material, comprising:
step S 1: blend-spinning a nanoclay and a resin to prepare modified synthetic fibers; and
step S2: mixing the modified synthetic fibers with natural fibers or with natural fibers and other fibers to prepare mixed fibers, thereby forming the low-VOC natural fiber composite material.

2. The preparation method according to claim 1, wherein after the step S2, the method further comprises:
step S3: spraying a nanoclay-coupling agent liquid mixture into the mixed fibers, thereby forming the low-VOC natural fiber composite material.

3. The preparation method according to claim 1 or 2, wherein the step S1 comprises:
blend-pelletizing a nanoclay and resin particles at a high temperature to prepare nanocomposite resin particles;
blend-spinning nanocomposite resin particles and resin particles of the same kind to prepare modified synthetic fibers.

4. The preparation method according to claim 1 or 2, wherein in the step S1, the nanoclay is 0.1%-2% of the total weight of the modified synthetic fibers.

5. The preparation method according to claim 1 or 2, wherein the nanoclay used in the step S 1 is nano-montmorillonite or inorganic particles having an absorption function, and the nanoclay has a particle size in the range of 2-10 µm.

6. The preparation method according to claim 1 or 2, wherein the resin used in the step S 1 is a thermoplastic polymer material.

7. The preparation method according to claim 6, wherein the thermoplastic polymer material is one or more selected from the group consisting of polyethylene, polypropylene, polylactic acid, a polyester material, polyethylene terephthalate and a polyamide material.

8. The preparation method according to claim 1 or 2, wherein in the step S2, the modified synthetic fibers are 30-70% of the total weight of the mixed fibers, and the natural fibers or the natural fibers and other fibers are 70-30% of the total weight of the mixed fibers, preferably wherein in the step S2, the modified synthetic fibers are 50% of the total weight of the mixed fibers, and the natural fibers or the natural fibers and other fibers are 50% of the total weight of the mixed fibers.

9. The preparation method according to claim 1 or 2, wherein the natural fibers and the other fibers are mixed at a mass ratio of 9:1 to 1:9.

10. The preparation method according to claim 1 or 2, wherein the natural fibers are one or a mixture of hemp, jute, linen, ramie, kenaf, cotton, kapok fibers, and sisal fibers, and the other fibers are one or a mixture of glass fibers and basalt fibers.

11. The preparation method according to claim 2, wherein in the step S3, a method for preparing the nanoclay-coupling agent liquid mixture comprises:
adding 0.5-2% of the nanoclay, 0.25-1% of a dispersant, and 1-2% of a silane coupler based on the total weight of the mixed fibers into water to form a nanoclay-coupling agent suspension having a concentration of 10-30%;
stirring the nanoclay-coupling agent suspension at 1000-1350 rpm for 0.5-2 h; and
stirring the nanoclay-coupling agent suspension at 1700-2000 rpm for 1.5-3 h, thus forming the nanoclay-coupling agent liquid mixture.

12. The preparation method according to claim 2 or 11, wherein the step S3 further comprises:
spraying, in a shredding or mixing stage in a nonwoven process, the nanoclay-coupling agent liquid mixture into the mixed fibers for blending;
shredding, mixing, lapping and needle punching the mixed fibers mixed with the nanoclay-coupling agent liquid mixture, to prepare the low-VOC natural fiber composite material; and/or
performing hot pressing treatment on the low-VOC natural fiber composite material to prepare a low-VOC natural fiber composite mat or prepressing plate having a surface density of 500-4000 g/m², preferably wherein for the hot pressing treatment, the preheating temperature is 190-230°C, the preheating time is 20-120s, and the dwell time is 20-90s.

13. A low-VOC natural fiber composite material prepared using the preparation method according to any one of claims 1 to 12.

14. An application of a low-VOC natural fiber composite material prepared using the method according to any one of claims 1 to 12 in preparation of automobile interior trims.

15. The application according to claim 14, comprising the following steps:
step S11: mixing the low-VOC natural fiber composite material with polypropylene fibers and wood fibers to form a matrix;
step S12: laying a surface decorative layer on a side surface of the matrix to form a composite mat material; and
step S13: die-forming the composite mat material, preferably wherein the step S13 further comprises:
tailoring and blanking the composite mat material according to a designed shape, and then heating and softening the composite mat material in a heating apparatus at 200-220°C; and
placing the softened mat material into a mold for press molding at a pressure of 30 KN/cm² for a dwell time of 3-5 minutes, and removing the mold to obtain the finished product.
